Europäisches Patentamt

European Patent Office

Office européen des brevets

(19)

(11) Numéro de publication: **0 027 090**
A1

# (12) DEMANDE DE BREVET EUROPEEN

(21) Numéro de dépôt: **80401431.4**

(22) Date de dépôt: **07.10.80**

(51) Int. Cl.³: **B 31 B 1/98,** B 65 H 15/00, B 65 G 57/081

(30) Priorité: **09.10.79 FR 7925069**

(43) Date de publication de la demande: **15.04.81 Bulletin 81/15**

(84) Etats contractants désignés: **AT BE CH DE GB IT LI LU NL SE**

(71) Demandeur: **ETUDES ET REALISATIONS INDUSTRIELLES DE BERSAC (E.R.I.B.) Sociéte dite, Le moulin des Vergnes, F-87370 Bersac (FR)**

(72) Inventeur: **Coussot, Serge, Le Moulin des Vergnes, F-87370 Bersac (FR)**

(74) Mandataire: **Ducas, Michel Louis Marie et al, Cabinet Boettcher 23, rue La Boétie, F-75008 Paris (FR)**

(54) **Dispositif d'empilage tête-bêche d'objets ou groupes d'objets, tels que cartons pliés d'emballage.**

(57) Un dispositif margeur de retenue (20) est monté sur un arbre transversal (19) à un convoyeur (2) qu'il surmonte. Il retient un premier lot d'objet qu'il retourne de 180° en même temps que des butées d'arrêt (26) pour un deuxième lot sur lequel il dépose le premier lot pour en faire un tas (29).

1 **0027090**

Dispositif d'empilage tête-bêche d'objets ou groupes d'objets, tels que cartons pliés d'emballage.

L'invention concerne un dispositif d'empilage tête-bêche d'objets ou groupes d'objets, tels que cartons pliés d'emballage, se présentant successivement par lots substantiellement identiques par leurs formes, leurs dimensions et le sens de leur présentation.

Dans la fabrication d'emballages en carton, on part d'un flan qu'on découpe, qu'on marque de lignes de pliage et qu'on plie au moins partiellement pour que l'emballage, prêt à être expédié à l'usine qui le remplira de produit à emballer, se présente sous la plus grande compacité possible. Les emballages ainsi préparés sortent en général un par un d'une plieuse ou d'une plieuse encolleuse. Mais du fait du pliage partiel, chaque emballage unitaire n'est pas d'épaisseur uniforme. En effet, il y a généralement un côté plus épais que l'autre, par exemple du côté d'un futur couvercle rabattu par la plieuse. C'est pourquoi, on est obligé de prévoir une opération manuelle pour retourner environ la moitié des emballages pour que les piles formées têtes-bêches et à expédier aient la même épaisseur des deux côtés et constituent ainsi des parallélépipèdes bien réguliers ayant au moins quatre arêtes parallèles entre elles et perpendiculaires au plan général des flans.

Le but de l'invention est de proposer un nouveau dispositif permettant de procéder avec sûreté et mécaniquement à l'opération de retournement tête-bêche de la moitié des emballages pliés d'une pile à constituer pour expédition.

Ce but est atteint, selon l'invention, dans un dispositif du type décrit au début, grâce au fait qu'il comporte un convoyeur de transfert comportant une zone de réception et une zone de délivrance et un moyen entraîné de soustraction et de retournement d'un lot présent dans la zone de réception et de restitution de ce lot retourné dans la zone de délivrance, l'espace occupé par le moyen entraîné de soustraction et retournement avec son lot soustrait et retourné se trouvant en dehors de l'espace balayé par un lot non soustrait transféré par le convoyeur de la zone de réception à la zone de délivrance.

Il est conforme à l'invention que le moyen entraîné de soustraction, de retournement et de restitution comprenne un moyen d'arrêt et de prise d'un lot dans la zone de réception.

Il est avantageux que le moyen entraîné de soustraction et de retournement et de restitution soit un dispositif margeur de prise basculable de 180° autour d'un axe transversal au sens de transfert du convoyeur et que l'axe de basculement du dispositif margeur soit à distance au-dessus du convoyeur. Il est avantageux que le dispositif comprenne des moyens de sélection des lots dits impairs à soustraire, retourner et restituer et des lots dits pairs à laisser transférer directement par le convoyeur de la zone de réception à la zone de délivrance.

Il est également conforme à l'invention que le dispositif/des moyens coordonnés : d'arrêt de chaque lot dit pair dans la zone de délivrance ; de restitution par dépôt de chaque lot dit impair, précédemment soustrait et retourné, sur le lot dit pair arrêté dans la zone de délivrance ; et de libération de la pile ainsi constituée alors entraînée à la suite par le convoyeur.

Il est alors avantageux que le moyen d'arrêt de chaque lot pair dans la zone de délivrance soit une butée d'arrêt présentée par le dispositif margeur retourné de 180° en position de restitution.

Selon un mode de réalisation, le dispositif de l'invention comporte au moins l'un des deux dispositifs suivants :

- en amont, un dispositif de stockage et déstockage par lots identiquement constitués quant au nombre et au sens de présentation d'objets identiques, tels que cartons pliés d'emballages.

- en aval un dispositif de réception et liage ou emballage des piles provenant de la zone de délivrance.

D'autres caractéristiques et avantages ressortiront de la description, qui sera donnée ci-après uniquement à titre d'exemple, d'un mode de réalisation de l'invention. On se reportera à cet effet aux dessins annexés dans lesquels :

- La figure 1 est une vue latérale d'un dispositif selon l'invention.

- La figure 2 est une vue en plan du dispositif de la figure 1.

- La figure 3 est un schéma explicatif du mode de constitution des piles.

- La figure 4 est une vue simplifiée du dispositif d'approvisionnement combiné au dispositif de l'invention.

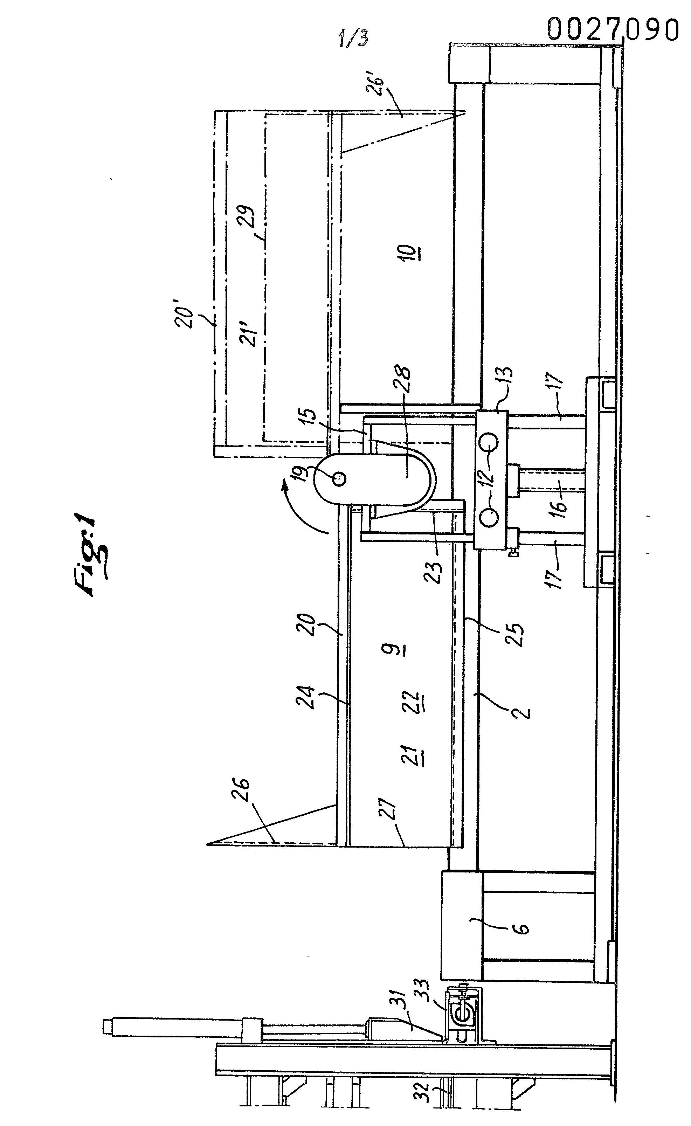

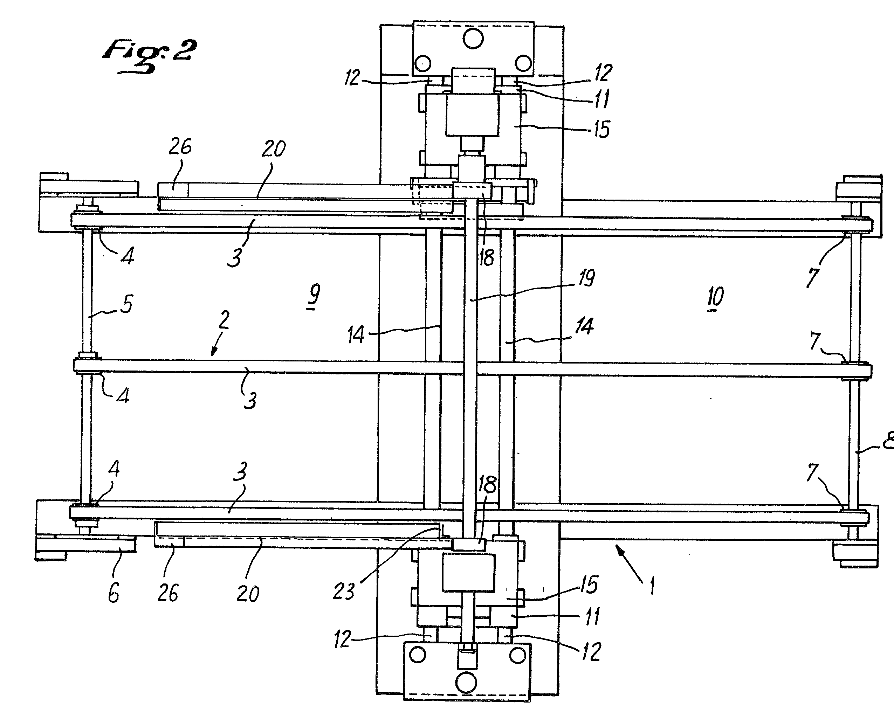

Un dispositif de l'invention comprend un bâti fixe 1 portant un convoyeur 2 à courroies 3 sans fin entraînées par des poulies 4 montées calées, mais réglables en écartement mutuel, sur un arbre moteur 5 entraîné par un moteur 6 et renvoyées par des poulies 7 montées sur un arbre de renvoi 8. En service normal, le convoyeur 2 a un seul sens de marche, à savoir de gauche à droite sur les figures 1 et 2. Il définit ainsi une zone de réception 9, à gauche sur les figures 1 et 2, et une zone de délivrance 10, à droite sur les figures 1 et 2. Sensiblement au milieu du convoyeur 2, et de part et d'autre de celui-ci, sont montés des chariots 11 guidés par des supports de guidage 14 mutuellement et symétriquement réglables en écartement horizontal par des vérins 12. Un ressort de compression est monté entre l'un des vérins 12 et son chariot 11 associé. Les supports de guidage 14 avec les vérins 12 sont montés sur deux plateaux élévateurs 13 réglables à même hauteur, par des vérins 16 et des colonnes 17. Les chariots 11 supportent chacun un support 15. Ces deux supports 15 sont donc réglables à la même hauteur et en écartement mutuel réglable de façon à présenter en alignement deux paliers 18, 18' pour un arbre 19 passant à distance du convoyeur 2 au-dessus de celui-ci et perpendiculairement à son sens de déplacement. De l'un des côtés, un support 15 porte également un moteur 28 d'entraînement en rotation de 180° dans un sens et dans l'autre de l'arbre 19. Sur l'arbre 19 sont calés en rotation deux bras 20 pouvant basculer ensemble/de 180°, à droite et à gauche du convoyeur, entre deux positions horizontales de sens inverses parallèlement au sens de déplacement du convoyeur 2, c'est-à-dire au-dessus de la zone de réception 9 et au-dessus de la zone de délivrance 10.

Les bras 20 ont des parties cannelées en concordance avec des cannelures de l'arbre 19 s'étendant dans la limite de débattement rendu possible par la course des vérins 12. C'est également en raison de la course de réglage des vérins 12 que le palier 18' doit permettre le libre coulissement de l'arbre 19.

Les bras 20 portent des margeurs 21 en forme de demi-caissons présentant un fond rectangulaire vertical 22 et trois rebords 23, 24, 25. Ces margeurs 21 sont montés symétriquement de façon à ce que leurs fonds verticaux 22 se projettent de part et d'autre du convoyeur 2. Lorsque ces bras 20 s'étendent du côté de réception 9, les fonds verticaux 22 s'étendent, en haut, depuis le bras 20 lui-même jusqu'à un niveau correspondant sensiblement à celui du plan du convoyeur 2. Il sera expliqué plus loin comment sont choisies et adaptées la hauteur de réglage des bras au-dessus du convoyeur et la dimension des fonds 22 des margeurs. En position du côté de réception, le margeur ne présente pas de rebord dirigé vers l'arrivée au convoyeur 2, mais il présente un rebord 23 du côté opposé, le plus près de l'axe de pivotement de l'arbre 19 ainsi que deux rebords 24, 25 sur ses arêtes alors horizontales. Au-dessus de son côté sans rebord, chaque margeur en position du côté réception présente une courte butée margeuse d'arrêt 26 dirigée vers le margeur vis-à-vis et vers le haut d'une hauteur sensiblement égale à l'arête 27 sans rebord du fond 22. On comprend donc que, lorsque les bras 20 ont basculé en 20' de 180° du côté délivrance, les positions respectives des margeurs 21 et des butées margeuses d'arrêt 26 ont été inversées pour se trouver respectivement en 20' et 21' comme représenté en trait interrompu à la figure 1.

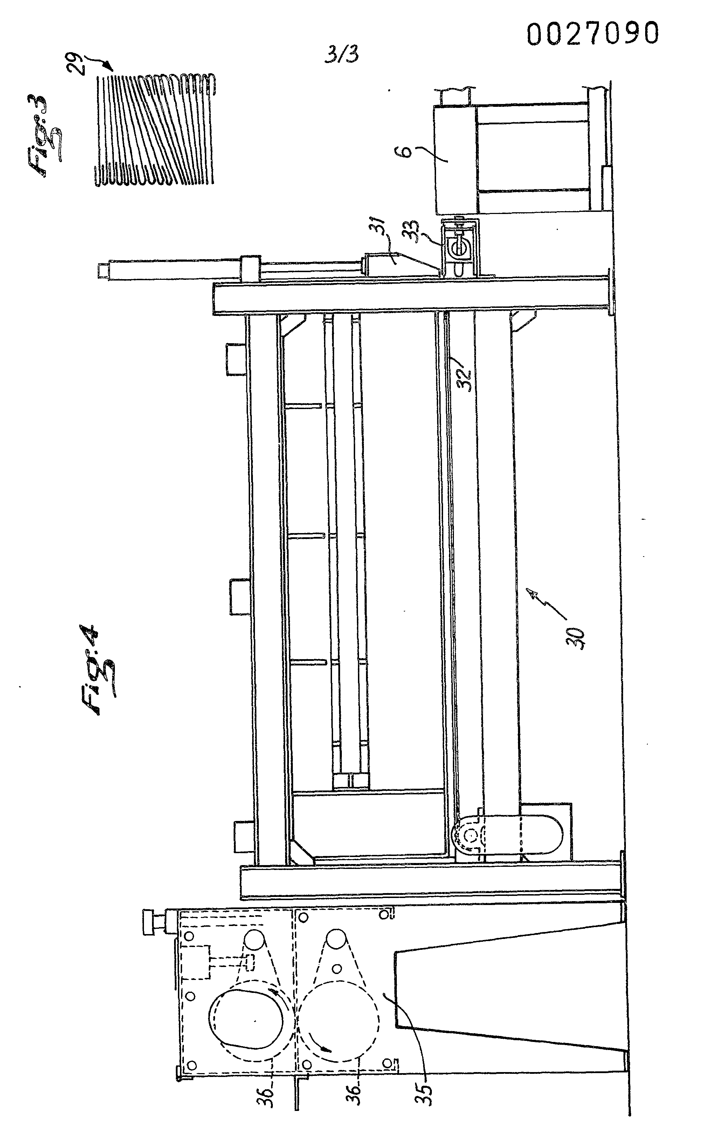

Le fonctionnement du dispositif est assuré et commandé de la façon suivante. Soient des cartons d'emballage pliés et se présentant empilés de guingois à empaqueter en lots de 400 mm d'épaisseur environ pour qu'ils soient empilés tête-bêche comme représenté à la figure 3.

On règle d'abord la largeur du convoyeur par calage convenable des poulies 7. Ensuite, on installe sur la machine décrite des margeurs 21 d'une longueur correspondant sensiblement à celle des cartons, observée selon leur sens de déplacement, et d'une hauteur de 200 mm environ, avec une marge de sécurité ; et on élève d'autant l'arbre 19 au-dessus du plan du convoyeur 2. Les butées margeuses 26 sont également de 200 mm de hauteur. On règle la commande des vérins 12 pour qu'ils puissent prendre trois positions possibles, à savoir une position de réception correspondant à la largeur des cartons avec une marge de sécurité, une position de serrage correspondant au serrage transversal des cartons et une position de libération correspondant à un écartement entre rebords vis-à-vis supérieur  à la largeur des cartons.

On place les bras en position d'attente du côté réception et on règle les margeurs en position de réception. On présente alors sur le convoyeur 2 un premier lot de cartons haut de 200 mm qui vient s'emboîter entre les margeurs, car il est arrêté par les rebords 23. On déclenche la position de serrage dans laquelle les margeurs, entraînés par les chariots 11, serrent les cartons de façon élastique, grâce au ressort intercalé, puis on bascule de 180° au moyen du moteur 25, ce qui entraîne le lot en retournement et vient le présenter au-dessus du poste de délivrance. Dans ce retournement les butées margeuses d'arrêt viennent prendre place dans la zone de délivrance, où il reste, sous les margeurs retournés, un espace de même dimension que celui qui est entre les margeurs et qui est actuellement occupé par le premier lot de cartons retournés. On présente alors dans la zone de réception un deuxième lot de cartons qui, comme on le comprend aisément, est entraîné directement par le convoyeur jusque sur les butées margeuses 26 exactement en-dessous du premier lot retourné. A ce moment, on arrête le convoyeur et on commande les vérins 12 en position de libération, ce qui fait que le premier lot retourné se place sur le second lot retourné, après quoi on remet en marche le convoyeur pour délivrer le lot 29 de 400 mm de cartons empilés sensiblement d'équerre au poste suivant, et on ramène les margeurs en position d'attente de réception. Bien entendu la séquence décrite peut être entièrement automatisée par asservissement, grâce à des détecteurs de présence en butée entre les margeurs, en position retournée de l'ensemble basculant, de présence en butée sur les butées margeuses de l'ensemble retourné.

On ne sortira pas du cadre de l'invention en faisant des piles de quatre ou six lots moyennant l'adjonction d'un poste de comptage ou de détecteurs de hauteur. Dans tous les cas le dispositif assure un moyen de sélection automatique des lots pairs et impairs. Il suffit d'asservir l'admission d'un lot sur deux à la présence des margeurs dans la zone de réception, l'autre lot pouvant être admis, pendant le basculement, si celui-ci est suffisamment rapide par un vérin par exemple. Si la hauteur de tas désirée est différente de 400 mm, on dimensionnera en conséquence les margeurs et les butées margeuses et on réglera la hauteur de l'axe de pivotement au-dessus du convoyeur.

Il est avantageux que l'installation comporte en amont un dispositif séparateur compteur 35, comportant une paire de rouleaux 36 tournant dans le même sens, de façon à n'admettre que le carton supérieur (ou inférieur) d'une alimentation où les cartons arrivent en écaille, suivi d'un magasin de stockage 30 permettant d'empiler les cartons par lots tels que décrits précédemment. Le magasin de stockage permet d'empiler les lots en suite horizontale pour les conduire finalement à un guichet de sortie 31 grâce à un tapis transporteur 32 dont le point de jetée 33 arrive sur le transporteur 2. Le guichet de sortie 31 est asservi à admettre deux lots espacés/lorsque les margeurs 21 sont en position d'attente au poste de réception. En aval tout dispositif connu de margeage et d'emballage ou liage conviendra pour recevoir et emballer ou lier les piles délivrées par le convoyeur 2.

8                    0027090

REVENDICATIONS

1) Dispositif d'empilage tête-bêche d'objets ou groupes d'objets, tels que cartons pliés d'emballage, se présentant successivement par lots substantiellement identiques par leurs formes, leurs dimensions et le sens de leur présentation, caractérisé en ce qu'il comporte un convoyeur de transfert comportant une zone de réception et une zone de délivrance et un moyen entraîné de soustraction et de retournement d'un lot présent dans la zone de réception et de restitution de ce lot retourné dans la zone de délivrance, l'espace occupé par le moyen entraîné de soustraction et retournement avec son lot soustrait et retourné se trouvant en dehors de l'espace balayé par un lot non soustrait transféré par le convoyeur de la zone de réception à la zone de délivrance.

2) Dispositif selon la revendication 1, caractérisé en ce que le moyen entraîné de soustraction, de retournement et de restitution comprend un moyen d'arrêt et de prise d'un lot dans la zone de réception.

3) Dispositif selon la revendication 1, caractérisé en ce que le moyen entraîné de soustraction et de retournement et de restitution est un dispositif margeur de prise basculable de 180° autour d'un axe transversal au sens de transfert du convoyeur.

4) Dispositif selon la revendication 3, caractérisé en ce que l'axe de basculement du dispositif margeur est à distance au-dessus du convoyeur.

5) Dispositif selon la revendication 1, caractérisé en ce qu'il comprend des moyens de sélection des lots dits impairs à soustraire et retourner et restituer et des lots dits pairs à laisser transférer directement par le convoyeur de la zone de réception à la zone de délivrance.

6) Dispositif selon la revendication 4, caractérisé en ce qu'il comporte des moyens coordonnés:
d'arrêt de chaque lot dit pair dans la zone de délivrance ;
de restitution par dépôt de chaque lot dit impair, précédemment soustrait et retourné, sur le lot dit pair arrêté
dans la zone de délivrance ; et de libération de la pile
ainsi constituée, alors entraînée à la suite par le convoyeur.

7) Dispositif selon la revendication 6
caractérisé en ce que le moyen d'arrêt de chaque lot pair
dans la zone de délivrance est une butée d'arrêt présentée
par le dispositif margeur retourné de 180° en position de
restitution.

8) Dispositif selon l'une quelconque
des revendications 1 à 7, caractérisé en ce qu'il comporte
des moyens de réglages de l'une au moins des caractéristiques suivantes :

      - largeur du convoyeur
      - hauteur relative du moyen de soustration,
        retournement et restitution
      - écartement d'entrée du moyen de soustraction,
        de retournement et restitution
      - écartement des moyens d'arrêt dans la zone
        de délivrance.

9) Dispositif selon la revendication 1,
caractérisé en ce qu'il comporte au moins l'un des deux
dispositifs suivants :

      - en amont, un dispositif de stockage et
déstockage par lots identiquement constitués quant au nombre et au sens de présentation d'objets identiques, tels que
cartons pliés d'emballages.

      - en aval, un dispositif de réception et
liage ou emballage des piles provenant de la zone de délivrance.

Fig.1

0027090

1/3

*Fig. 2*

Fig:3

Fig:4

29

36

36

35

31

33

6

32

30

| Catégorie | Citation du document avec indication, en cas de besoin, des parties pertinentes | Revendication concernée | |
|---|---|---|---|
| | **DOCUMENTS CONSIDERES COMME PERTINENTS** | | **CLASSEMENT DE LA DEMANDE (Int. Cl. 3)** |
| | FR - A - 2 249 009 (BOBST)<br><br>* Page 2, lignes 11-35; figures 1,2; page 3, lignes 22-31; page 4, lignes 10-28 *<br><br>---- | 1,3,4,<br>5,6,8 | B 31 B  1/98<br>B 65 H  15/00<br>B 65 G  57/081 |
| | | | **DOMAINES TECHNIQUES RECHERCHES (Int. Cl. 3)**<br><br>B 31 B<br>B 65 H<br>B 65 B<br>B 65 G |
| | | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |
| | Le présent rapport de recherche a été établi pour toutes les revendications | | |

| Lieu de la recherche | Date d'achèvement de la recherche | Examinateur |
|---|---|---|
| La Haye | 15-01-1981 | CLAEYS |

OEB Form 1503.1  06.78